# EUROPÄISCHE PATENTSCHRIFT

(11) **EP 2 486 368 B1**
(45) Veröffentlichungstag und Bekanntmachung des Hinweises auf die Patenterteilung: **24.01.2018**
(21) Anmeldenummer: 10760265.8
(22) Anmeldetag: 22.09.2010
(51) Int. Cl.: G01B 21/04, G01B 5/00, G01B 7/012, B23Q 15/24, G01D 11/10, F16F 1/36

(54) **MAGNETISCH BETÄTIGTES DREHGELENK UND VERFAHREN ZUM BETREIBEN DES GELENKS**
MAGNETICALLY ACTUATED ROTARY JOINT AND METHOD FOR OPERATING THE JOINT
ARTICULATION TOURNANTE ACTIONNÉE MAGNÉTIQUEMENT ET PROCÉDÉ POUR FAIRE FONCTIONNER L'ARTICULATION

(30) Priorität: 07.10.2009 DE 102009048581
(43) Veröffentlichungstag der Anmeldung: 15.08.2012
(73) Patentinhaber: Carl Zeiss Industrielle Messtechnik GmbH, 73447 Oberkochen (DE)
(72) Erfinder: ENGEL, Thomas, 73432 Aalen (DE)
(74) Vertreter: Brunotte, Joachim Wilhelm Eberhard
(86) Internationale Anmeldenummer: PCT/EP2010/005852
(87) Internationale Veröffentlichungsnummer: WO 2011/042124

(56) Entgegenhaltungen:
- EP-A1- 1 906 135
- US-A1- 2005 011 710
- US-A1- 2005 150 125
- US-B1- 6 430 828

## Beschreibung

Die Erfindung betrifft ein magnetisch betätigtes Drehgelenk zum Drehen eines Werkzeugs, insbesondere eines Sensors zum Abtasten von Prüfobjekten zur Erzeugung von Messsignalen eines Koordinatenmessgerätes. Die Erfindung betrifft ferner ein Verfahren zum Betreiben eines derartigen Gelenks. Ferner betrifft die Erfindung ein Koordinatenmessgerät, an dem ein derartiges Drehgelenk mit angebrachtem Sensor montiert ist.

Motorisch betriebene, rastende Gelenke, insbesondere Dreh-Schwenk-Gelenke, die ein Drehen des Sensors um verschiedene Drehachsen erlauben, sind bereits bekannt. In der Koordinatenmesstechnik dienen sie dazu, Sensoren so zu positionieren und/oder auszurichten, dass eine Messaufgabe möglichst präzise, schnell und/oder auf möglichst einfache Weise erfüllt werden kann. Unter einem Sensor wird eine beliebige Einrichtung verstanden, die Messsignale liefert (d.h. einen Messsignalgeber aufweist) oder es anderen Einrichtungen ermöglicht, bei Kontakt des Sensors oder bei Erreichen einer definierten Position und/oder Ausrichtung des Sensors, Messsignale zu erzeugen. Z.B. kann ein mechanischer Kontakt des Sensors mit einer Oberfläche von der anderen Einrichtung detektiert werden und von dieser anderen Einrichtung ein entsprechendes Messsignal erzeugt werden. Unter einem Messsignal wird auch ein Signal verstanden, das lediglich anzeigt, dass ein mechanischer Kontakt durch den Sensor hergestellt ist oder dass der Sensor in einer definierten Position und/oder Ausrichtung angeordnet ist. Ein Beispiel für ein solches "Kontaktsignal" ist das Schaltsignal eines tastenden Sensors vom so genannten schaltenden Typ, der auf dem Gebiet der Koordinatenmesstechnik allgemein bekannt ist.

Die Erfindung ist aber nicht auf das Drehen von Sensoren beschränkt, die zu vermessende Gegenstände mechanisch antasten. Vielmehr kann z. B. ein Sensor auch ein optischer Sensor sein, der z.B. mittels elektromagnetischer Strahlung Oberflächen abtastet oder invasive Messstrahlung erzeugt, die in das Untersuchungsobjekt eindringt. Ein weiteren Beispiel für Sensoren sind kapazitive Sensoren, die z.B. über eine elektrische Kapazität des Sensors Vorgänge in ihrer Umgebung messen, z.B. elektromagnetische Felder oder die Veränderung von elektromagnetischen Feldern. Außerdem kann das Drehgelenk statt eines Abtast-Sensors ein Werkzeug zum Bearbeiten eines Werkstücks tragen.

Für diverse Messaufgaben ist es wünschenswert, dass der Sensor reproduzierbar in eine bestimmte Drehstellung gebracht werden kann. Dies bedeutet, dass der Sensor zwischenzeitlich die gewünschte Drehstellung verlassen haben kann. Z.B. wird der Sensor so kalibriert, dass er in der bestimmten Drehstellung eine Messaufgabe mit einer geforderten Genauigkeit erfüllen kann. Wird die Drehstellung nicht mit hoher Genauigkeit reproduziert, muss die Kalibrierung wiederholt werden. Daher sind bereits so genannte rastende Sensorgelenke vorgeschlagen worden, bei denen die definierte Drehstellung durch mechanische Mittel reproduzierbar erreicht werden kann, z.B. durch einen Zahnkranz, der sich entlang einer Kreislinie in einer Ebene erstreckt und entsprechende Eingreifmittel, z.B. einen zweiten solchen Zahnkranz. Generell betrifft die vorliegende Erfindung insbesondere Drehgelenke, die eine Vielzahl von unterschiedlichen Drehstellungen reproduzierbar ermöglichen. Z.B. können Drehstellungen um eine Drehachse reproduziert werden, wobei die Drehstellungen einen Winkelabstand von 2,5° oder 7,5° haben.

Rastenden Drehgelenken ist in vielen Fällen gemeinsam, dass sie eine Aus- und Einrückmechanik aufweisen. Um den Sensor um die Drehachse des Drehgelenks drehen zu können, wird ein drehbarer Teil des Drehgelenks aus einer Rastposition, d.h. einer Position, in der der drehbare Teil gegen eine unbeabsichtigte Drehung um die Drehachse gesichert ist, ausgerückt. Hierzu wird der drehbare Teil relativ zu einem feststehenden Teil des Gelenks in der axialen Richtung der Drehachse bewegt. Wenn in dieser Beschreibung davon die Rede ist, dass der drehbare Teil in der axialen Richtung bewegt wird, ist darunter eine Relativbewegung zu dem feststehenden Teil zu verstehen. Dies bedeutet, dass im Laborsystem betrachtet der drehbare Teil bewegt werden kann, der feststehende Teil bewegt werden kann oder beide Teile bewegt werden können.

In der ausgerückten Stellung des drehbaren Teils kann nun eine andere Drehstellung eingestellt werden, indem der drehbare Teil um die Drehachse gedreht wird. Anschließend kann der drehbare Teil wieder eingerückt werden, wobei er eine andere Rastposition als vorher einnimmt.

DE 196 07 680 A1 beschreibt ein solches Drehgelenk als Teil eines Gelenksondenkopfs zum Orientieren einer Sonde relativ zu einem bewegbaren Arm einer Koordinatenmessmaschine. Der Gelenksondenkopf umfasst eine Basis, durch welche der Kopf auf dem Arm angebracht werden kann. Erste und zweite Rotoren, die hintereinander an der Basis angebracht und relativ zur Basis bzw. zum ersten Rotor um erste bzw. zweite senkrechte Achsen drehbar sind, sind Teil des Kopfes. Die Rotoren sind in einer Vielzahl von wiederholbaren indizierten Positionen in Eingriff bringbar, die sich in diskreten Winkelorientierungen um die ersten bzw. zweiten Achsen befinden, und sie sind in axialer Richtung in Eingriff bringbar und außer Eingriff bringbar aus diesen Positionen, um eine Drehung in andere indizierte Positionen zu ermöglichen. Ein Eingriff des Kopfes wird durch einen Motor vorgenommen, der ein Seil zurückzieht. Das distale Ende des Seils ist mit einem rechtwinkligen Verriegelungshebel auf dem ersten Rotor verbunden, der geschwenkt wird, um den zweiten Rotor in einer indizierten Position in Eingriff zu bringen, und es hebt den ersten Rotor körperlich in Eingriff mit der Basis. Die Spannung, mit welcher der Kopf verriegelt wird, ist durch eine federvorgespannte Rolle bestimmt, um welche das Kabel herumgeführt ist.

Die Reproduzierungsgenauigkeit bei der wiederholten Einstellung derselben Drehposition wird unter anderem durch das Einrücken und Ausrücken des drehbaren Teils beeinflusst. Schlagen der drehbare Teil und der feststehende Teil oder der drehbare Teil und andere Teile des Gelenks hart aneinander an, dann kann die Reproduzierungsgenauigkeit abnehmen.

Außerdem kann beim harten Anschlagen, insbesondere beim Einsatz des Gelenks an einem Koordinatenmessgerät, die Genauigkeit der Messung beeinträchtigt werden. Z. B. kann ein an dem Gelenk montierter Sensor ungenaue Messwerte liefern, weil seine Sensorik oder Mechanik nicht mehr einem kalibrierten Zustand entspricht. Ferner kann die Mechanik anderer beweglicher Teile (z. B. anderer Gelenke) des Koordinatenmessgeräts in ihrer Funktion beeinträchtigt werden.

Das Einrücken und/oder Ausrücken des drehbaren Teils wird bei dem Drehgelenk der vorliegenden Erfindung durch eine Magneteinrichtung, die insbesondere zumindest einen Elektromagneten aufweist, verursacht. Dazu weist der drehbare Teil einen magnetischen oder magnetisierbaren Bereich auf. Eine Magnetkraft der Magneteinrichtung bewegt den drehbaren Teil in axialer Richtung, um ihn auszurücken und/oder wieder einzurücken. Alternativ stößt die Magnetkraft diese axiale Bewegung an, d.h. ermöglicht es dem drehbaren Teil, die jeweilige axiale Position zu verlassen. Die Bewegung kann dann z. B. durch Federkraft oder durch eine elastische Rückstellkraft verursacht werden. Auch eine Haltekraft, mit der der drehbare Teil in einer axialen Position gehalten wird, kann durch eine Magnetkraft oder zumindest teilweise durch eine Magnetkraft bewirkt werden. Die Magnetkraft wirkt in allen genannten Fällen vorzugsweise in der axialen Richtung, d.h. in der Richtung der Drehachse, um die der drehbare Teil im ausgerückten Zustand gedreht werden kann. Das aneinander Anschlagen von Teilen des Gelenks kann bei einer Magneteinrichtung besonders hart sein, da anziehende magnetische Kräfte mit abnehmendem Abstand in der Regel progressiv zunehmen.

US 6,430,828 B1 beschreibt einen Stift, der durch ein oberes Kopplungselement gestützt wird, welches durch ein unteres Kopplungselement gestützt wird, das durch einen Sensor gestützt wird. Der Sensor ist beweglich durch eine Schiene eines Koordinatenpositionsgeräts unterstützt. Die Kopplungselemente werden durch einen Permanentmagneten zusammengehalten und ihre relative Positionierung wird durch erste und zweite Sätze von Positionierungselementen hergestellt, die an dem ersten und zweiten Kopplungselement vorgesehen sind. Die Sätze von Positionierungselementen sind gegenseitig in Eingriff bringbar, und zwar in einer Mehrzahl von Winkelpositionen um die Achse der Kopplung, um eine Mehrzahl von Winkelpositionen bereitzustellen, bei denen das untere Kopplungselement stabile und reproduzierbare Positionen relativ zu dem oberen Kopplungselement hat. Das untere Kopplungselement wird von dem oberen Kopplungselement gelöst, indem ein Elektromagnet aktiviert wird.

US 5,185,936 offenbart einen Sensorkopf mit einer Unterstützung, durch die der Sensorkopf an dem Arm eines Koordinatenpositionsgerätes zurückgehalten wird. Ein Rotor wird magnetisch an der Unterstützung zurückgehalten. Der Rotor ist zwischen einer Mehrzahl von Winkelpositionen, die durch einen Ring von Kugeln und drei Paaren benachbarter zylindrischer Körper bereitgestellt sind, rotierbar. Eine Antriebswelle ist linear beweglich, um die Kugeln von den zylindrischen Körpern außer Eingriff zu bringen und ist rotierbar, um den Rotor in eine neue Position zu rotieren, woraufhin die Antriebswelle zurückgezogen wird, um den Satz von drei Kugeln mit den zylindrischen Körpern wieder in Eingriff zu bringen.

US 5,470,592 beschreibt eine Vorrichtung zum Erzeugen einer Klemmkraft bei Spritzgussmaschinen, die stationäre und bewegliche Platten aufweisen, zwischen denen eine Spritzgussform montiert ist. Ein Mechanismus ist mit der beweglichen Platte gekoppelt, um die Spritzgussform zu öffnen und zu schließen. Es sind Mittel zum Verriegeln des Mechanismus vorgesehen, nachdem die Spritzgussform geschlossen worden ist. Die Klemmkraft, die während des Einspritzens erforderlich ist, wird durch zumindest ein Element erzeugt, das aus magnetostriktivem Material gefertigt ist. Das Material ist zwischen dem Mechanismus und der beweglichen Platte angeordnet. Jedes magnetostriktive Element ist von einer magnetischen Wicklung umgeben, die gesteuert mit Energie versorgt wird, um ein magnetisches Wechselfeld zu erzeugen, das eine Verlängerung des zugeordneten Elements verursacht, um die Klemmkraft zu erzeugen.

Das englischsprachige Abstract der JP 07227091 A, veröffentlicht in Patent Abstract of Japan, offenbart einen Stoppzylinder, der einen ähnlichen thermischen Ausdehnungskoeffizienten wie eine super-magnetostriktive Welle hat. Der Stoppzylinder ist außerhalb der Welle angeordnet und ein Seitenspalt, der größer ist als der andere Seitenspalt zwischen einer Ventilwelle und einem Abstandshalter, ist zwischen einem Stopper des Zylinders und einem Steuerelement gebildet. Wenn der Zylinder vor der Welle thermisch expandiert, wird eine aufwärts gerichtete Verlängerung des Stoppers des Zylinders ermöglicht, die durch den Spalt begrenzt ist, und eine Vergrößerung des anderen Spaltes wird verhindert. Nachdem der Stopper aufgrund der Temperaturerhöhung in Kontakt mit einem Vorsprung gebracht ist, wird der andere Spalt zunehmend verringert und die Verlängerung der Welle wird reduziert.

US 2005/0150125 A1 beschreibt eine Vorrichtung zum lösbaren Verbinden von zwei Teilen. An dem ersten Teil ist ein Dämpfer in der Weise angeordnet, dass eine Relativbewegung zwischen dem ersten Teil und dem zweiten Teil gedämpft wird, wenn die Teile miteinander in Kontakt gebracht werden. Insbesondere werden der erste Teil und der zweite Teil durch magnetische Mittel lösbar zusammengehalten. Die Teile können ein Haltemodul und ein Aufgabenmodul sein, die einen Sensorkopf aufweisen, z.B. einen drehbaren Sensorkopf, der eine Rotation um zumindest eine Achse erlaubt. Der Dämpfer kann ein Dämpfergehäuse und einen in dem Gehäuse angeordneten Kolben aufweisen, der vorgespannt ist, um von dem Gehäuse vorzustehen.

US 2005/0011710 A1 beschreibt eine abstimmbare Vibrations-Isolierungseinrichtung, die ein magnetorheologisches Elastomer (MRE) aufweist. Durch Manipulieren eines magnetischen Feldes innerhalb des MRE wird die Steifigkeit der Einrichtung gesteuert.

Es ist eine Aufgabe der vorliegenden Erfindung, ein Drehgelenk mit einer Magneteinrichtung der vorgenannten Art anzugeben, bei dem ein hartes Anschlagen bei Bewegungen des drehbaren Teils in axialer Richtung vermieden wird. Ferner soll ein Verfahren zum Herstellen eines derartigen Drehgelenks und ein Verfahren zum Betreiben eines derartigen Drehgelenks angegeben werden.

Das magnetostriktive Material bildet zumindest einen Teil des Anschlags, d.h. die beim aneinander Anschlagen der Gelenkteile wirkenden Kräfte werden zumindest zu einem wesentlichen Teil auf das Material ausgeübt.

Vorzugsweise ist das magnetostriktive Material ein magnetostriktives Elastomer (auch magnetorheologisches Elastomer, MRE, genannt). Ein Anschlagen an das Elastomer führt zu einer elastischen Verformung des Materials. Das Anschlagen ist daher gedämpft bzw. weich. Dass das MRE zumindest einen Teil des Anschlags bildet, wird vorzugsweise dadurch erreicht, dass durch Veränderung eines magnetischen Feldes eine Form des aktiven Materials verändert wird, insbesondere eine Länge verändert wird, d. h. in der Regel vergrößert wird, um den weichen Anschlag zu bilden.

Beim aneinander Anschlagen der Geräteteile wird die Bewegung der Geräteteile daher verhältnismäßig langsam abgebremst und werden durch das Anschlagen erzeugte mechanische Schwingungen gedämpft. Nach dem Ausklingen der Schwingung kann wieder der Zustand hergestellt werden, der nach einem harten Anschlagen bestehen würde. Z. B. kann das insgesamt wirkende magnetische Feld abgeschaltet werden oder die Feldstärke zumindest lokal am magnetostriktiven Material reduziert werden. Es ist jedoch auch denkbar, dass für den Zustand des harten Anschlages eine höhere Feldstärke erforderlich ist bzw. ein eingeschaltetes Feld existieren muss.

Typischerweise weisen MRE ein Trägermaterial auf, das während der Fertigung mit magnetischen Materialien gemischt wird, so dass die magnetischen Materialien möglichst isotrop im Trägermaterial verteilt sind. Als Trägermaterial kommen insbesondere Polymere infrage, die magnetostriktive Eigenschaften aufweisen. Auch Materialien wie Gummi, Silikon, Acryl können als MRE ausgestaltet werden. Das Trägermaterial kann ein Material mit homogener Dichte auch in Teilvolumina sein oder alternativ ein aufgeschäumtes oder extrudiertes Material, das feine oder auch größere Hohlräume enthält. Insbesondere für die Dämpfungswirkung kann diese weiche Materialstruktur von besonderem Vorteil sein, da diese Materialien besser gedehnt und gestaucht werden können, was zu einer größeren Längenänderung führt.

Bei der Herstellung des Pufferbereichs aus magnetostriktivem Material kann das Material in einem Magnetfeld angeordnet sein, um für die magnetostriktive Funktion enthaltene Stoffe oder Teilbereiche entsprechend auszurichten. Bei einer Variante wird die Richtung der Feldlinien des Magnetfeldes während dem Aushärten des Trägermaterials so gewählt, dass sie senkrecht zu der später, beim Einsatz als Puffer wirksamen Feldrichtung steht. Auf diese Weise können sich die magnetischen Anteile des MRE durch Umpolung des Magnetfeldes umorientieren. Dies bewirkt eine besonders große Änderung der Pufferlänge in Feldrichtung, die für die Verwendung im Rahmen der vorliegenden Erfindung besonders vorteilhaft ist.

Insbesondere wird Folgendes vorgeschlagen: Ein Drehgelenk zum Drehen eines Werkzeugs, insbesondere eines Sensors zum Abtasten von Prüfobjekten zur Erzeugung von Messsignalen eines Koordinatenmessgerätes, wobei
- das Drehgelenk einen um eine Drehachse drehbaren Teil aufweist, mit dem das Werkzeug verbindbar oder verbunden ist,
- das Drehgelenk einen feststehenden Teil aufweist, relativ zu dem der drehbare Teil um die Drehachse drehbar ist,
- der drehbare Teil relativ zu dem feststehenden Teil in axialer Richtung der Drehachse beweglich ist, wobei in einer ersten axialen Position eine Drehung des drehbaren Teils um die Drehachse verhindert ist und wobei in einer zweiten axialen Position eine Drehung des drehbaren Teils um die Drehachse möglich ist,
- das Drehgelenk eine erste magnetische Einrichtung aufweist, die derart ausgestaltet und angeordnet ist, dass eine von der magnetischen Einrichtung erzeugte Magnetkraft (insbesondere in der axialen Richtung) auf den drehbaren Teil ausgeübt wird, um den drehbaren Teil in der ersten und/oder zweiten axialen Position zu halten und/oder eine Bewegung des drehbaren Teils von der ersten in die zweite axiale Position und/oder umgekehrt zu bewirken,
- das Drehgelenk zumindest einen Pufferbereich aus einem magnetostriktiven Material aufweist, der derart an dem drehbaren Teil, an dem feststehenden Teil und/oder einem Anschlagselement mit einem Anschlag für das Erreichen der zweiten axialen Position angeordnet ist, dass eine Länge des Pufferbereichs in axialer Richtung durch ein Magnetfeld der ersten magnetischen Einrichtung und/oder ein Magnetfeld einer anderen magnetischen Einrichtung verändert wird, sodass der drehbare Teil beim Erreichen der ersten oder zweiten axialen Position an dem Pufferbereich anschlägt.

Unter dem feststehenden Teil des Sensorgelenks wird insbesondere ein in der axialen Richtung feststehender Teil verstanden. Zu dem feststehenden Teil gehört daher auch z.B. ein Teil eines Antriebes zum Drehen des drehbaren Teils im ausgerückten Zustand, wenn dieser Teil des Antriebes zwar eine Drehbewegung um die Drehachse ausführen kann, dabei aber in axialer Richtung nicht oder in vernachlässigbarer Weise bewegt wird.

Wenn bei dem Drehgelenk von einer Drehachse die Rede ist, schließt dies nicht aus, dass das Drehgelenk mehr als eine Drehachse aufweist. Z.B. weisen so genannte Dreh-Schwenkgelenke für Koordinatenmessgeräte wie bereits der Name sagt üblicherweise zwei Drehachsen auf. Es wird bevorzugt, dass bei Drehgelenken mit mehr als einer ausrückbaren Drehachse jede Ausrückmechanik mit dem erfindungsgemäßen Pufferbereich versehen ist.

Das Drehgelenk kann eine Arretierungseinrichtung aufweisen, mit der der drehbare Teil in jeweils einer von einer Mehrzahl von Drehstellungen in Eingriff gelangen kann und hinsichtlich einer Drehbewegung arretiert ist, wenn der Eingriff hergestellt ist. Insbesondere verhindert die Arretierungseinrichtung in der ersten (eingerückten) axialen Position des drehbaren Teils, dass dieser in der Drehstellung gehalten wird. Die Arretierungseinrichtung und der drehbare Teil können dabei miteinander in Eingriff sein und außer Eingriff gelangen, wenn der drehbare Teil in die zweite (ausgerückte) axiale Position bewegt wird. Z. B. können der drehbare Teil und der feststehende Teil jeweils einen Zahnkranz aufweisen, die die Arretierungseinrichtung bilden. Die Zahnkränze können sich z.B. entlang einer Kreislinie koaxial um die Drehachse herum erstrecken. Andere Ausgestaltungen, z.B. mit einem Kugelkreis und Eingriffselementen, die eine in radialer Richtung zur Drehachse ausgerichtete Zylinderachse aufweisen, sind ebenfalls möglich.

Der Pufferbereich kann an dem drehbaren Teil, an dem feststehenden Teil und/oder dem Anschlagselement angeordnet sein. Es wird bevorzugt, dass die Länge des Pufferbereichs in axialer Richtung durch eine Veränderung des Magnetfeldes der ersten magnetischen Einrichtung oder durch ein Magnetfeld einer zweiten magnetischen Einrichtung derart verändert wird, dass der drehbare Teil einen harten Anschlag kontaktiert, nachdem der drehbare Teil den Pufferbereich kontaktiert hat. Die Veränderung wird vorzugsweise durch eine Steuerungseinrichtung gesteuert. Es ist jedoch auch möglich, dass sich das Magnetfeld aufgrund der axialen Bewegung des drehbaren Teils verändert und sich die Länge des Pufferbereichs aufgrund der trägen und daher langsamen Längenänderung des Materials erst nach dem Kontaktieren so ändert, dass der drehbare Teil den harten Anschlag kontaktiert.

Insbesondere kann die erste magnetische Einrichtung zumindest einen Permanentmagneten aufweisen. Vorzugsweise weist die erste magnetische Einrichtung außerdem oder stattdessen zumindest einen Elektromagneten auf. Weiterhin wird bevorzugt, dass der drehbare Teil magnetisches oder magnetisierbares Material aufweist. Durch Steuerung des Magnetfeldes des zumindest einen Elektromagneten kann die Länge des Pufferbereichs eingestellt werden.

Wenn die erste magnetische Einrichtung einen Elektromagneten aufweist und wenn der drehbare Teil einen Anker aufweist, der zwischen einer ersten Anschlagsposition in der ersten axialen Position und einer zweiten Anschlagsposition in der zweiten axialen Position hin und her bewegbar ist, kann der Elektromagnet die Bewegung zumindest in einer Richtung steuern. Der feststehende Teil weist in diesem Fall vorzugsweise zumindest einen Pufferbereich aus dem magnetostriktiven Material auf, der bei einem entsprechenden Gesamt-Magnetfeld einen Vor-Anschlag bildet, der von einem Anker des Elektromagneten oder von dem mit dem Anker verbundenen drehbaren Teil vor dem durch den feststehende Teil gebildeten ersten Anschlag erreicht wird, wenn sich der Anker in die erste axiale Position bewegt. Der Anker ist Teil des drehbaren Teils oder mit dem drehbaren Teil verbunden.

Bei der ersten magnetischen Einrichtung handelt es sich vorzugsweise um einen oder mehrere Elektromagneten, die am feststehenden Teil angeordnet sind. Insbesondere bevorzugt wird, dass der drehbare Teil einen Anker aus permanentmagnetischem Material oder zumindest magnetisierbarem Material aufweist, der ebenfalls in axialer Richtung beweglich ist. In der ersten axialen Position liegt der Anker an einem durch den feststehenden Teil gebildeten ersten Anschlag an. Ferner befindet sich aus Sicht des ersten Anschlages auf der gegenüberliegenden axialen Seite des Ankers ein zweiter Anschlag, der bei der Bewegung des drehbaren Teils nicht in axialer Richtung mitbewegt wird. Dadurch kann der Anker zwischen der Anschlagsposition an dem ersten Anschlag und der Anschlagsposition an dem zweiten Anschlag hin- und herbewegt werden. Die beiden Anschlagspositionen entsprechen der ersten und zweiten axialen Position.

Vorzugsweise wird der Anker in der ersten Anschlagsposition und/oder in der zweiten Anschlagsposition aufgrund der Magnetkräfte des oder der Permanentmagneten des Ankers gehalten, so dass er nicht selbsttätig die Anschlagsposition verlassen kann. Wird aber von dem Elektromagneten oder den Elektromagneten des feststehenden Teils eine entsprechende Magnetkraft auf den Anker ausgeübt, kann dieser die jeweilige Anschlagsposition verlassen. Dabei kann der Elektromagnet spätestens dann wieder abgeschaltet werden, wenn der Anker und damit der Rest des mit ihm verbundenen drehbaren Teils die jeweils andere axiale Position erreicht hat. Bezüglich des Ankers kann diese Ausgestaltung daher als bistabile Ausgestaltung bezeichnet werden, wenn in beiden axialen Positionen aufgrund von Magnetkräften des Ankers eine stabile Position beibehalten wird. Der Elektromagnet dient dann lediglich zum Umschalten von dem einen in den anderen bistabilen Zustand.

Insbesondere bei einer solchen Anordnung dient das Magnetfeld des Elektromagneten vorzugsweise aber auch dazu, den zumindest einen Pufferbereich aus magnetostriktivem Material zu beeinflussen und den Pufferbereich damit zu einer Längenausdehnung- oder Kontraktion zu bringen, so dass der erwähnte weiche Anschlag für das Anschlagen des drehbaren Teils, insbesondere des Ankers, erreicht wird.

Insbesondere bei der bistabilen Anordnung ist z.B. an dem ersten Anschlag ein Pufferbereich oder sind mehrere Pufferbereiche angeordnet. Das von dem oder den Elektromagneten erzeugte, (zusätzliche) Magnetfeld führt dazu oder trägt zumindest dazu bei, dass der oder die Pufferbereiche einen Vor-Anschlag bilden. Dies bedeutet, dass der Anker an dem Vor-Anschlag, also an dem magnetostriktiven Material, anschlägt, bevor er an dem eigentlichen ersten Anschlag anschlägt. Nach dem Anschlagen an dem Vor-Anschlag kann der Elektromagnet ausgeschaltet werden oder sein Magnetfeld entsprechend verändert werden, so dass der oder die Pufferbereiche kontrahieren und der Anker daher den ersten (harten) Anschlag erreicht. Durch das Anschlagen an dem Vor-Anschlag kann aber von dem Anker auch eine Kraft auf den oder die Pufferbereiche ausgeübt werden, die das magnetostriktive Material komprimieren, so dass auch ohne Abschalten oder Verändern des von dem oder den Elektromagneten erzeugten Zusatzfeldes der Anker den ersten Anschlag erreicht.

Ferner kann das magnetostriktive Material dazu verwendet werden, insbesondere durch Einschalten des oder der Elektromagneten oder Verändern des elektromagnetischen Feldes, den Anker von dem ersten Anschlag geringfügig zu entfernen und auf diese Weise die auf Permanentmagnete zurückzuführende Anziehungskraft zwischen dem Anker und dem feststehenden Teil zu verringern. Insbesondere wenn der magnetostriktive Effekt in dem oder den Pufferbereichen langsamer abklingt als das elektromagnetische Feld des oder der Elektromagneten, kann dies das Umschalten in die andere stabile Position erleichtern. Z.B. wird das von dem oder den Elektromagneten erzeugte Magnetfeld umgepolt, so dass der lediglich an dem Vor-Anschlag anliegende Anker abgestoßen wird und sich dem zweiten Anschlag nähert.

Ferner kann das zuvor bereits genannte Anschlagselement eine zweite magnetische Einrichtung aufweisen, die derart ausgestaltet und angeordnet ist, dass eine von der zweiten magnetischen Einrichtung erzeugte Magnetkraft in der axialen Richtung auf den drehbaren Teil ausgeübt wird, die den Anker in der zweiten axialen Position hält. In diesem Fall kann das Anschlagselement zumindest einen Pufferbereich aus dem magnetostriktiven Material aufweisen, der bei einem entsprechenden Gesamt-Magnetfeld einen Vor-Anschlag bildet, der von dem Anker oder von dem mit dem Anker verbundenen drehbaren Teil vor dem zweiten Anschlag erreicht wird, wenn sich der Anker in die zweite axiale Position bewegt.

Auch der zweite Anschlag kann mit einem Elektromagneten oder einer Anordnung aus Elektromagneten kombiniert sein. Der oder die Elektromagneten können in entsprechender Weise wie der Elektromagnet des feststehenden Teils betrieben werden. Auf die zuvor genannten Merkmale und Funktionsweisen wird Bezug genommen. Insbesondere kann durch einen oder mehrere an dem zweiten Anschlag vorgesehene Pufferbereich aus magnetostriktivem Material ebenfalls ein Vor-Anschlag gebildet werden, der von dem oder den Elektromagneten des zweiten Anschlags steuerbar ist. Je nach dem wirkenden elektromagnetischen Zusatzfeld ist der Vor-Anschlag vorhanden oder nicht, d. h. variiert die Länge des magnetostriktiven Materials. Vorzugsweise werden der oder die Elektromagneten des zweiten Anschlags abgeschaltet, wenn der Anker den Vor-Anschlag erreicht hat und eventuell Schwingungen abgeklungen sind.

Das Drehgelenk kann einen Antriebsteil aufweisen, der angetrieben durch eine Antriebseinrichtung um die Drehachse drehbar ist, wobei der drehbare Teil in der zweiten axialen Position derart in mechanischem Kontakt zu dem Antriebsteil ist, dass der Antriebsteil den drehbaren Teil bei einer Drehbewegung um die Drehachse mitnimmt. Insbesondere kann das Anschlagselement, das den zweiten Anschlag bildet, Teil des Antriebsteils sein oder identisch mit dem Antriebsteil sein.

Der Antriebsteil kann eine zweite Arretierungseinrichtung aufweisen, mit der der drehbare Teil in zumindest einer relativ zu dem Antriebsteil vorgegebenen Drehstellung in Eingriff gelangen kann, sodass der Antriebsteil den drehbaren Teil bei einer Drehbewegung um die Drehachse mitnimmt, wenn der drehbare Teil und die zweite Arretierungseinrichtung miteinander in Eingriff sind.

Zum Umfang der Erfindung gehört ferner ein Koordinatenmessgerät, wobei das Drehgelenk in einer der hier beschriebenen Ausgestaltungen an dem Koordinatenmessgerät montiert ist und einen Sensor des Koordinatenmessgeräts als Werkzeug trägt.

Ferner wird ein Verfahren zum Betreiben eines Drehgelenks vorgeschlagen, das zum Drehen eines Werkzeugs, insbesondere eines Sensors zum Abtasten von Prüfobjekten zur Erzeugung von Messsignalen eines Koordinatenmessgerätes, ausgestaltet ist, wobei
- das Werkzeug mit einem um eine Drehachse drehbaren Teil des Drehgelenks verbunden wird, sodass das Werkzeug bei einer Drehbewegung des drehbaren Teils gedreht wird,
- das Drehgelenk einen feststehenden Teil aufweist, relativ zu dem der drehbare Teil um die Drehachse drehbar ist,
- der drehbare Teil relativ zu dem feststehenden Teil in axialer Richtung der Drehachse bewegt wird, um ihn in eine erste axiale Position zu bringen, in der eine Drehung des drehbaren Teils um die Drehachse verhindert ist, und/oder ihn in eine zweite axiale Position zu bringen, in der eine Drehung des drehbaren Teils um die Drehachse möglich ist,
- eine von einer ersten magnetischen Einrichtung erzeugte Magnetkraft auf den drehbaren Teil ausgeübt wird, um den drehbaren Teil in der ersten und/oder zweiten axialen Position zu halten und/oder eine Bewegung des drehbaren Teils von der ersten in die zweite axiale Position und/oder umgekehrt zu bewirken,
- das Magnetfeld der ersten magnetischen Einrichtung und/oder einer anderen magnetischen Einrichtung derart eingestellt wird, dass die Länge eines Pufferbereichs aus einem magnetostriktiven Material verändert wird, sodass der drehbare Teil beim Erreichen der ersten oder zweiten axialen Position an dem Pufferbereich anschlägt.

Der Pufferbereich kann beim Ausrücken auch die Ausrückbewegung unterstützen, indem die Längenänderung des Pufferbereichs zu einem Wegdrücken des beweglichen, auszurückenden Teils von dem feststehenden Teil führt.

Zum Umfang der Erfindung gehört auch ein Verfahren zum Herstellen eines Drehgelenks, das einem Drehen eines Werkzeugs dient, insbesondere eines Sensors zum Abtasten von Prüfobjekten zur Erzeugung von Messsignalen eines Koordinatenmessgerätes, wobei
- ein um eine Drehachse drehbarer Teil bereitgestellt wird, mit dem das Werkzeug verbindbar oder verbunden ist,
- ein feststehender Teil bereitgestellt wird, relativ zu dem der drehbare Teil um die Drehachse drehbar ist,
- der drehbare Teil relativ zu dem feststehenden Teil in axialer Richtung der Drehachse beweglich ausgeführt wird, wobei in einer ersten axialen Position eine Drehung des drehbaren Teils um die Drehachse verhindert ist und wobei in einer zweiten axialen Position eine Drehung des drehbaren Teils um die Drehachse möglich ist,
- eine erste magnetische Einrichtung derart ausgestaltet und angeordnet wird, dass eine von der magnetischen Einrichtung erzeugte Magnetkraft auf den drehbaren Teil ausübbar ist, um den drehbaren Teil in der ersten und/oder zweiten axialen Position zu halten und/oder eine Bewegung des drehbaren Teils von der ersten in die zweite axiale Position und/oder umgekehrt zu bewirken,
- zumindest ein Pufferbereich aus einem magnetostriktiven Material an dem drehbaren Teil, an dem feststehenden Teil und/oder an einem Anschlagselement mit einem zweiten Anschlag für das Erreichen der zweiten axialen Position angeordnet wird, dass eine Länge des Pufferbereichs in axialer Richtung durch ein Magnetfeld der ersten magnetischen Einrichtung und/oder ein Magnetfeld einer anderen magnetischen Einrichtung verändert wird, sodass der drehbare Teil beim Erreichen der ersten oder zweiten axialen Position an dem Pufferbereich anschlägt.

Ausgestaltungen des Betriebsverfahrens und des Herstellungsverfahrens ergeben sich entsprechend aus der Beschreibung von Ausgestaltungen des Drehgelenks.

Ausführungsbeispiele der Erfindung werden nun unter Bezugnahme auf die beigefügte Zeichnung beschrieben. Die einzelnen Figuren der Zeichnung zeigen:
- Fig. 1: schematisch einen Längsschnitt durch eine besonders bevorzugte Ausführungsform eines Drehgelenks, wobei sich der drehbare Teil im eingerasteten Zustand bzw. im eingerückten Zustand befindet,
- Fig. 2: einen Längsschnitt durch das in Fig. 1 dargestellte Drehgelenk, wobei sich der drehbare Teil im ausgerasteten, d.h. ausgerückten Zustand befindet,
- Fig. 3: einen nicht maßstäblichen Querschnitt durch das in Fig. 1 und Fig. 2 dargestellte Drehgelenk entlang der Linie III-III in Fig. 2, und
- Fig. 4: schematisch eine Seitenansicht eines Drehgelenks, wobei sich ein Anker des drehbaren Teils in der ersten axialen Position befindet,
- Fig. 5: die Anordnung gemäß Fig. 4, wobei sich jedoch der Anker des drehbaren Teils annähernd in der zweiten axialen Position befindet,
- Fig. 6: schematisch eine Seitenansicht einer Anordnung mit einem drehbaren Teil und einem feststehenden Teil des Drehgelenks, wobei sich der drehbare Teil auf den feststehenden Teil zubewegt,
- Fig. 7: die Anordnung gemäß Fig. 6, wobei der drehbare Teil einen durch magnetostriktives Material gebildeten Vor-Anschlag des feststehenden Teils erreicht hat und
- Fig. 8: die Anordnung gemäß Fig. 7, wobei jedoch die durch das magnetostriktive Material gebildeten Pufferbereiche verkürzt worden sind, so dass der drehbare Teil nicht mehr an dem magnetostriktiven Material anliegt.

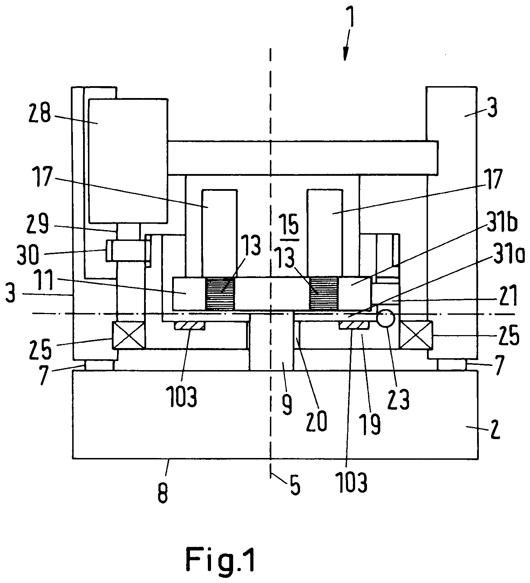

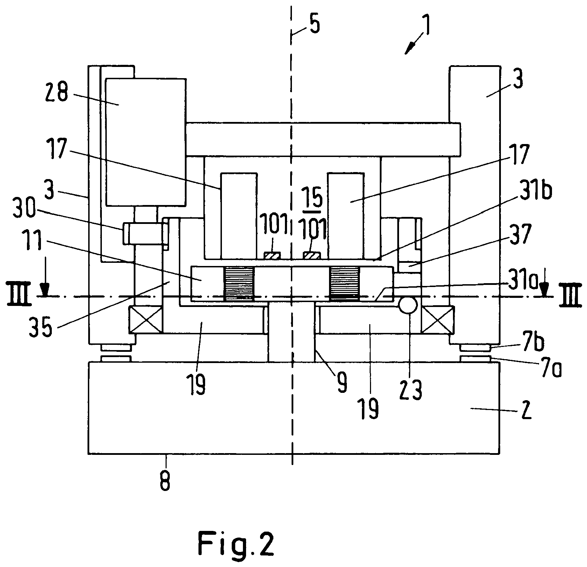

Fig. 1 zeigt schematisch ein Drehgelenk 1 mit einem drehbaren Teil 2 und einem feststehenden Teil 3. Der drehbare Teil 2 ist um eine Drehachse 5 drehbar, wenn sich der drehbare Teil 2 wie in Fig. 2 dargestellt im ausgerückten Zustand befindet.

Im eingerückten Zustand des drehbaren Teils 2 ist dieser über eine Verzahnung oder andere Arretierungseinrichtung mit dem feststehenden Teil in Eingriff. Fig. 1 zeigt das Ausführungsbeispiel einer Verzahnung 7. Wie aus Fig. 2 schematisch erkennbar ist, ist als erster Teil der Verzahnung 7 an dem drehbaren Teil 2 ein erster Zahnkranz 7a ausgebildet. An dem feststehenden Teil 3 ist als zweiter Teil der Verzahnung 7 ein zweiter Zahnkranz 7b ausgebildet. Beim Einrücken gelangen die Zähne der Zahnkränze 7a, 7b miteinander in Eingriff, wobei sich im eingerückten Zustand Zähne der Zahnkränze 7a, 7b in Ausnehmungen zwischen den Zähnen des jeweils anderen Zahnkranzes in Eingriff befinden. Andere Ausgestaltungen einer Arretierungseinrichtung sind bei der in Fig. 1 und Fig. 2 dargestellten Ausführungsform alternativ möglich.

Mit dem drehbaren Teil 2 ist über nicht näher dargestellte Mittel zumindest ein Sensor oder ein Werkzeug verbunden, der bzw. das um die Drehachse 5 gedreht werden soll. Der feststehende Teil 3 kann über nicht näher dargestellte Mittel befestigt werden, insbesondere an einem Koordinatenmessgerät oder einer Werkzeugmaschine befestigt werden. Z.B. wird der feststehende Teil 3 mit einem beweglichen Arm oder einer Pinole eines Koordinatenmessgeräts verbunden.

Der drehbare Teil 2 weist an einer in Fig. 1 und Fig. 2 nach unten weisenden Außenseite einen Block 8 auf, der z.B. als Zylinderscheibe ausgeführt ist. In der axialen Richtung der Drehachse 5 und rotationssymmetrisch zu dieser erstreckt sich ausgehend von dem Block 8 eine Welle 9, die drehfest mit dem Block 8 verbunden ist, in das Innere des Drehgelenks 1 hinein. An dem von dem Block 8 aus gesehen gegenüberliegenden Ende der Welle 9 ist eine (insbesondere rotationssymmetrisch geformte) Scheibe 11 drehfest mit der Welle 9 verbunden.

In dem Ausführungsbeispiel der Fig. 1 und 2 weist die Scheibe 11 eine Anordnung von Permanentmagneten 13 auf und bildet daher einen Anker für einen Elektromagneten, auf den noch eingegangen wird. Dabei ist eine Mehrzahl der Permanentmagneten 13 ringförmig um die Drehachse 5 verteilt in der Scheibe 11 angeordnet. Die magnetischen Pole der Permanentmagneten 13 sind alle in gleicher Weise so ausgerichtet, dass entweder die Nordpole in radialer Richtung, bezogen auf die Drehachse 5, außen liegen und die Südpole innen liegen oder umgekehrt. Auf diese Weise erhält man eine Magneteinrichtung in der Scheibe 11, die radial polarisiert ist. Es ist jedoch auch möglich, dass die Permanentmagneten anders orientiert sind, insbesondere mit ihrer Nord-Süd-Richtung parallel zu der Drehachse 5. Auch kann die Scheibe 11 lediglich magnetisierbares Material aufweisen.

Aus Sicht der Welle 9 an der in der axialen Richtung der Drehachse 5 gegenüberliegenden Seite der Scheibe 11 ist ein Bereich 15 des feststehenden Teils 3 angeordnet. In das als magnetisches Flussführungsmaterial (z.B. ein Ferrit) ausgestaltete Material dieses Bereichs 15 ist ein Elektromagnet oder eine Anordnung von Elektromagneten 17 eingelassen.

Fig. 1 zeigt den eingerückten Zustand des drehbaren Teils 2. In diesem Zustand liegt die Scheibe 11 zwar nicht an dem Bereich 15 an. Zwischen dem Bereich 15 und der Scheibe 11 befindet sich aber ein geringerer Zwischenraum (Luftspalt) als im ausgerückten Zustand, der in Fig. 2 dargestellt ist. Im eingerückten Zustand hält die von dem Permanentmagneten 13 erzeugte Magnetkraft den drehbaren Teil 2 in der in Fig. 1 dargestellten eingerückten Position. Obwohl die Magneteinrichtung, die durch die Permanentmagnete 13 gebildet wird, radial polarisiert ist, wird zwischen dem Bereich 15 und der Scheibe 11 eine in der axialen Richtung wirkende Magnetkraft erzeugt. Die Magnetfeldlinien verlaufen zwar unmittelbar an der in radialer Richtung nach außen weisenden Oberfläche der Permanentmagnete 13 radial nach außen. Sie sind jedoch in ihrem weiteren Verlauf stark gekrümmt und führen annähernd senkrecht zu der Oberfläche des Bereichs 15 in axialer Richtung in den Bereich 15 hinein. Entsprechendes gilt für die Feldlinien innerhalb des Rings der Permanentmagnete 13.

Allgemeiner formuliert handelt es sich bei dem Material des Bereichs 15 um ein magnetisierbares Material und weist der drehbare Teil des Drehgelenks in dem Ausführungsbeispiel zumindest einen Permanentmagneten auf, so dass die von dem zumindest einen Permanentmagneten erzeugte Magnetkraft in der axialen Richtung der Drehachse wirkt und den drehbaren Teil im eingerückten Zustand festhält. Ein vorzugsweise verbleibender Luftspalt zwischen dem Bereich des drehbaren Teils, der den zumindest einen Permanentmagneten aufweist, und dem Bereich des feststehenden Teils, der das magnetisierbare Material aufweist, führt dazu, dass die Drehstellung des drehbaren Teils durch die Arretierungseinrichtung definiert wird und vorzugsweise in axialer Richtung keine weiteren mechanischen Berührungsstellen zwischen dem drehbaren Teil und dem feststehenden Teil existieren als an der Arretierungseinrichtung. Daher ist die jeweilige Drehstellung reproduzierbar mit hoher Genauigkeit einstellbar.

Der feststehende Teil 3 weist in der in Fig. 1 und Fig. 2 dargestellten Ausführungsform eine im Wesentlichen hohlzylindrische Form auf. Im Innern des Hohlzylinders befindet sich die Welle 9 und befindet sich auch die Scheibe 11 des drehbaren Teils 2, d.h. die Welle 9 und die Scheibe 11 erstrecken sich von der Außenseite (unten in Fig. 1 und Fig. 2) des Drehgelenks 1 in das Innere des Hohlzylinders hinein.

Außerdem befindet sich im Inneren des Hohlzylinders jedoch noch ein im Wesentlichen scheibenförmiges Antriebselement 19, das eine Durchgangsbohrung 20 aufweist, durch welche sich die Welle 9 hindurcherstreckt. Das Antriebselement 19 dient dem Antrieb des drehbaren Teils 2 in der ausgerückten Position, die in Fig. 2 dargestellt ist. In diesem Zustand ist die Scheibe 11 bzw. zumindest ein mit der Scheibe 11 verbundenes Eingriffselement 21 in Eingriff mit dem Antriebselement 19 bzw. mit entsprechenden Mitteln des Antriebselements 19.

Im Ausführungsbeispiel wird der Eingriff der Scheibe 11 mit dem Antriebselement 19 dadurch erzielt, dass sich eine Mehrzahl (z.B. 3 Stück) von Eingriffselementen 21 radial an einer Außenseite der Scheibe 11 nach außen erstreckt und in gleichem Abstand zu der Drehachse 5 an dem Antriebselement 19 entsprechende Mittel (hier z.B. Kugelpaare 23) befestigt sind, so dass die Eingriffselemente 21 im ausgerückten Zustand des drehbaren Teils mit den Mitteln des Antriebselements 19 in Eingriff gelangen. Der Eingriff bewirkt, dass eine Drehbewegung des Antriebselements 19 um die Drehachse 5 eine Drehbewegung der Scheibe 11 und damit des gesamten drehbaren Teils 2 bewirkt, da das Antriebselement 19 die Scheibe 11 mitnimmt. Dabei ist die Drehposition der Scheibe 11 und des Antriebselements 19 relativ zueinander durch die zwischen den beiden Teilen ausgebildete zweite Arretierungseinrichtung (die in dem Ausführungsbeispiel durch die Eingriffselemente 21 und die Kugelpaare 23 gebildet ist) exakt definiert und damit vorgegeben. Außerdem wird die Arretierung zwischen der Scheibe 11 und dem Antriebselement 19 durch eine Bewegung des drehbaren Teils 2 ausschließlich in axialer Richtung erreicht. Ferner ist die Arretierungseinrichtung zwischen der Scheibe 11 und dem Antriebselement 19 so ausgestaltet, dass durch die Bewegung des drehbaren Teils 2 in der axialen Richtung ein mechanischer Kontakt an mehreren Stellen um die Drehachse 5 herum verteilt erzielt wird. An diesen mehreren Stellen wird der Kontakt durch die Bewegung in der axialen Richtung gleichzeitig erreicht. An allen diesen Kontaktstellen findet der Kontakt durch einen Eingriff statt, der die Übertragung von Drehmomenten von dem Antriebselement 19 auf die Scheibe 11 erlaubt. Aus diesen Gründen treten weder bei der Herstellung des Eingriffs noch bei der Drehbewegung um die Drehachse 5 Querkräfte auf, die zu einer Verkippung der Längsachse des drehbaren Teils 2 (um die Längsachse ist der drehbare Teil 2 im Wesentlichen rotationssymmetrisch ausgestaltet) relativ zu der Drehachse 5 führen könnten. Auch der nachfolgende Prozess des Wiedereinrückens des drehbaren Teils 2, d.h. das Lösen der zweiten Arretierungseinrichtung zwischen der Scheibe 11 und dem Antriebselement 19, führt nicht zu solchen Querkräften. Daher können verschiedene Drehstellungen des drehbaren Teils 2 mit sehr hoher Reproduzierungsgenauigkeit wieder eingestellt werden.

Beim Ausrücken des drehbaren Teils 2 aus der in Figur 1 gezeigten axialen Position in die in Figur 2 gezeigte axiale Position gelangt die Scheibe 11 wie beschrieben mit ihren Eingriffselementen 21 in Kontakt mit den Kugelpaaren 23, die daher einen Anschlag für die Scheibe 11 bilden. In der oben verwendeten Terminologie ist dies der zweite Anschlag und ist die Scheibe 19 oder sind die Kugelpaare 23 das Anschlagselement.

Beim Einrücken des drehbaren Teils 2 aus der in Figur 2 gezeigten axialen Position in die in Figur 1 gezeigte axiale Position gelangt die Scheibe 11 (d. h. der Anker) zwar nicht unmittelbar in Kontakt mit dem feststehenden Teil 3, jedoch gelangt der Zahnkranz 7a des drehbaren Teils 2 in Kontakt mit dem Zahnkranz 7b des feststehenden Teils 3. Der Zahnkranz 7b bildet daher einen Anschlag für den drehbaren Teil 2. In der oben verwendeten Terminologie ist dies der erste Anschlag. Auf zusätzliche Pufferbereiche, die in Fig. 1 und 2 mit den Bezugszeichen 101 (am feststehenden Teil) und 103 (am Anschlagselement, hier die Scheibe 19) bezeichneten, wird noch näher eingegangen.

Das Antriebselement 19 ist, wie durch Lagerteile 25 zwischen dem Antriebselement 19 und der Hohlzylinderwand des feststehenden Teils 3 schematisch angedeutet, drehbeweglich um die Drehachse 5 gelagert. Dabei kann das Antriebselement 19 dennoch als Bereich des feststehenden Teils angesehen werden, da das Antriebselement 19 nicht in der axialen Richtung beweglich ist, sondern lediglich drehbeweglich ist.

Links oben in der schematischen Darstellung der Fig. 1 und 2 ist ein Motor 28 dargestellt, der über eine Antriebswelle 29 und ein drehfest mit der Antriebswelle 29 verbundenes Zahnrad 30 die Scheibe 19 antreibt, um sie um die Drehachse 5 zu drehen. Bei der Ausführungsform der Fig. 1 und 2 können jedoch alternativ andere Antriebsarten vorgesehen sein. Die dargestellte Antriebsart hat den Vorteil, dass die Scheibe 19 an ihrem Außenumfang drehbar gelagert ist und der nicht koaxial zu der Drehachse 5 wirkende Antrieb daher nicht oder lediglich geringfügig zu einer Verkippung der Scheibe 19 relativ zu der Drehachse 5 führt. Auch ist der Motor entfernt von dem drehbaren Teil 2 und der Scheibe 19 angeordnet, so dass die von dem Motor produzierte Wärme allenfalls geringfügig zu einer Erwärmung der Teile führt, die für die reproduzierbare Einstellung von Drehstellungen entscheidend sind, d.h. der drehbare Teil 2 selbst und die Scheibe 19. Auch die erste Arretierungseinrichtung 7 liegt entfernt von dem Motor 28.

Das Antriebselement, hier in Form der Scheibe 19, hat jedoch noch eine weitere Funktion. Da das Antriebselement zumindest teilweise aus magnetisierbarem Material besteht und die Scheibe 11 zumindest einen Permanentmagneten aufweist, übt die Scheibe 11 auf das Antriebselement 19 eine anziehende, in axialer Richtung wirkende Magnetkraft aus, die den drehbaren Teil 2 in axialer Richtung in einen Zustand zu bringen versucht, in dem der drehbare Teil 2 aus der ersten Arretierungseinrichtung 7 ausgerückt ist. Solange sich jedoch die Scheibe 11 nahe an dem Bereich 15 befindet, ist die zwischen dem Bereich 15 und der Scheibe 11 wirkende Magnetkraft stärker. Durch Betätigung des Elektromagneten 17 kann jedoch die Magnetkraft zwischen dem Bereich 15 und der Scheibe 11 geschwächt oder sogar umgekehrt werden, so dass insgesamt auf die Scheibe 11 Magnetkräfte wirken, die den drehbaren Teil 2 aus der ersten Arretierungseinrichtung 7 ausrücken. Dadurch gelangt die Scheibe 11 über die zweite Arretierungseinrichtung 21, 23 oder eine alternative Arretierungseinrichtung in Eingriff mit dem Antriebselement 19. Dieser Zustand ist in Fig. 2 dargestellt. Auch in diesem Zustand verbleibt vorzugsweise ein Luftspalt 31a zwischen der Scheibe 11 und dem Antriebselement 19, obwohl zwischen diesen beiden Teilen eine weiterhin anziehende Magnetkraft wirkt.

Wenn der ausgerückte Zustand erreicht ist und die zweite Arretierungseinrichtung in Eingriff ist, ist der Elektromagnet 17 wieder abgeschaltet. Der Elektromagnet 17 kann bereits dann abgeschaltet werden, wenn die anziehende Magnetkraft zwischen der Scheibe 11 und dem Antriebselement 19 größer ist als die anziehende Magnetkraft zwischen dem Bereich 15 und der Scheibe 11.

Um den drehbaren Teil 2 wieder in die erste Arretierungseinrichtung 7 einzurücken, wird der Elektromagnet 17 mit umgekehrter Stromrichtung bestromt, so dass er eine zwischen dem Bereich 15 und der Scheibe 11 wirkende anziehende Magnetkraft in axialer Richtung erzeugt. Hierdurch entsteht eine Situation, in der die insgesamt auf die Scheibe 11 wirkende, resultierende Magnetkraft in Richtung des Bereichs 15 gerichtet ist, so dass die Scheibe 11 außer Eingriff mit dem Antriebselement 19 gelangt, d.h. aus der zweiten Arretierungseinrichtung ausrückt und die erste Arretierungseinrichtung 7 eingerückt wird. Wie bereits erwähnt, verbleibt in dem vollständig eingerückten Zustand der ersten Arretierungseinrichtung 7 ebenfalls ein Luftspalt 31b zwischen der Scheibe 11 und dem Bereich 15.

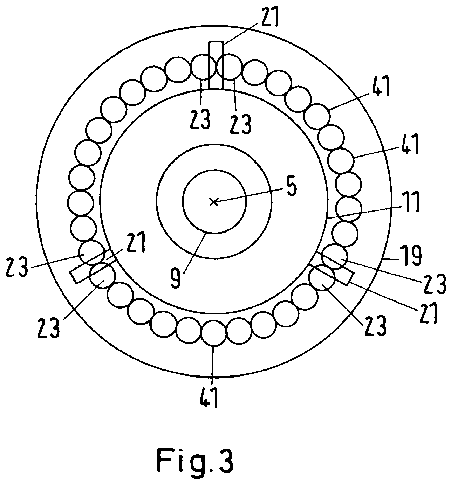

Fig. 3 zeigt einen Schnitt in einer Ebene senkrecht zur Bildebene der Fig. 2 entlang der Linie III-III, wobei jedoch in Fig. 3 lediglich die Scheibe 11 und mit ihr verbundene oder von ihr kontaktierte Teile dargestellt sind. Man erkennt auf einer um die Drehachse 5 konzentrisch verlaufende Kreislinie angeordnete Vielzahl von Kugeln 41, die in die der Scheibe 11 zugewandten Oberfläche des Antriebselements 19 eingelassen sind. Alternativ könnten auch lediglich Kugelpaare 23, wie bereits anhand von Fig. 2 beschrieben, an bestimmten Stellen der Kreislinie an der Oberfläche des Antriebselements 19 vorgesehen sein. In diesem Fall ist zu gewährleisten, dass das Antriebselement nicht verdreht wird, während sich der drehbare Teil 2 im eingerückten Zustand der ersten Arretierungseinrichtung 7 befindet. Andernfalls würde beim Ausrücken des drehbaren Teils 2 die Scheibe 19 nicht zuverlässig in Eingriff mit dem Antriebselement 19 gelangen.

Als Eingriffselement zum Eingreifen in den Zwischenraum zwischen jeweils zwei Kugeln 41 sind am Außenumfang der Scheibe 11 mehrere zylindrisch geformte Vorsprünge 21 befestigt. Im Ausführungsbeispiel beträgt der Winkelabstand, gemessen um die Drehachse 5, zwischen den Vorsprüngen 21 jeweils 120°.

Anders als in Fig. 3 dargestellt und wie in Fig. 1 und Fig. 2 angedeutet, kann das Antriebselement 19 topfartig ausgestaltet sein, wobei sich die Seitenwände des Topfes ausgehend von der Ebenen der Drehlagerung 25 in axialer Richtung in Richtung des Motors 28 erstrecken. In diesem Fall weist das Antriebselement 19 an drei Stellen (oder alternativ an mehr als drei Stellen) jeweils eine Ausnehmung 37 in der Topfwand 35 auf, in die jeweils eines der Eingriffselemente 21 eingreift. Im ausgerückten Zustand der ersten Arretierungseinrichtung 7 befinden sich die Eingriffelemente 21 dabei in Eingriff mit einem Kugelpaar 23. Im eingerückten Zustand der Arretierungseinrichtung 7 sind diese Eingriffselemente 21 nicht in Eingriff mit einem Kugelpaar 23.

Es soll hier nochmals betont werden, dass die zweite Arretierungseinrichtung mit Kugelpaaren oder einem Kugelkreis und entsprechend geformten Eingriffselementen lediglich ein Ausführungsbeispiel für eine Arretierungseinrichtung zum Arretieren der Drehposition relativ zu dem Antriebselement ist. Auch kann diese Arretierungseinrichtung anders ausgestaltet sein, z.B. zwei Zahnkränze aufweisend, die miteinander in Eingriff oder außer Eingriff gebracht werden durch eine Bewegung in axialer Richtung.

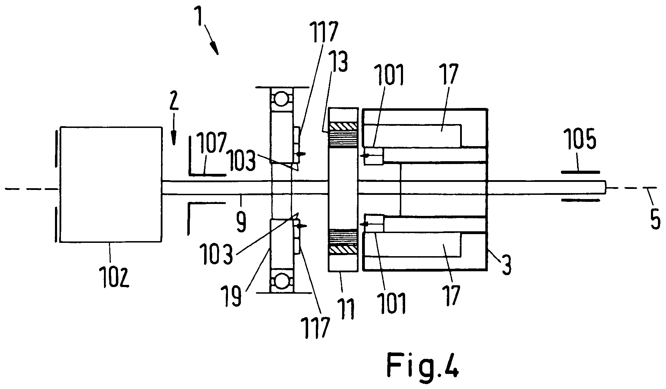

Fig. 4 zeigt schematisch eine Anordnung mit Teilen eines Drehgelenks. Dabei kann es sich z.B. um das in Fig. 1 bis Fig. 3 dargestellte Drehgelenk handeln. In diesem Fall sind Teile des Drehgelenks nicht dargestellt und die dargestellten Teile vereinfacht dargestellt. In Fig. 4 bis Fig. 8 werden teilweise dieselben Bezugszeichen wie in Fig. 1 bis Fig. 3 verwendet. Dies dient dazu, Teile, die gleich sind oder in ihrer Funktion einander entsprechend, leichter erkennbar zu machen. Der drehbare Teil weist eine in axialer Richtung (von rechts nach links in Fig. 4) verlaufende Welle 9 auf, mit der die Scheibe 11 bzw. der Anker, der durch die Scheibe 11 gebildet wird, fest verbunden ist. Bei einer Drehbewegung des Ankers 11 dreht sich daher die Welle 9 mit. Ferner ist am freien Ende (links in Fig. 4) ein Werkzeug, insbesondere ein Sensor eines Koordinatenmessgeräts, mit der Welle 9 verbunden, das bei einer Drehbewegung der Welle 9 mitgedreht wird. Die Welle 9 ist mit Hilfe von Dreh- und Axiallagern 105, 107 gelagert, so dass sie eine Drehbewegung um ihre Längsachse und eine axiale Bewegung ausführen kann. Der Bereich, in dem die Welle mit dem Anker 11 in axialer Richtung beweglich ist, ist durch den für den Anker 11 vorgesehenen Freiraum definiert. Für eine axiale Bewegung nach rechts, auf den feststehenden Teil 3 zu, bildet dieser einen Anschlag für den Anker 11. Alternativ kann ein anderer Anschlag an einem nicht gezeigten Bereich des feststehenden Teils 3 vorgesehen sein, etwa wie in dem Ausführungsbeispiel von Fig. 1 bis Fig. 3.
Für eine axiale Bewegung nach links bildet das Anschlagselement 19 einen Anschlag, welches wie im Fall des Ausführungsbeispiels der Fig. 1 bis 3 mit dem Anker 11 in Eingriff gelangen kann und diesen um die Drehachse drehen kann.

An dem feststehenden Teil 3, und zwar an der dem Anker 11 zugewandten Seite, sind zwei Pufferbereiche 101 aus magnetostriktivem Material angeordnet. Bei anderen Ausführungsformen können mehr oder weniger Pufferbereiche vorgesehen sein, die sich alternativ oder zusätzlich an anderen Stellen des feststehenden Teils 3 befinden können. Es ist auch möglich, dass ein oder mehrere Pufferbereiche an dem Anker 11 angeordnet sind. In dem in Fig. 4 gezeigten Zustand sind die Pufferbereiche 101 in einem kontrahierten Zustand, in dem sie nicht an dem Anker 11 anliegen.

Das Anschlagselement 19 weist an der dem Anker 11 zugewandten Seite ebenfalls zumindest einen Pufferbereich 103 auf, der aus magnetostriktivem Material besteht. Der Pufferbereich 103 ist z.B. ringförmig, rotationssymmetrisch zu der Drehachse der Welle 9 ausgebildet und angeordnet. Ferner weist das Anschlagselement 19 an derselben Seite wie das zumindest eine Pufferelement 103 in diesem Ausführungsbeispiel einen optional vorgesehenen Elektromagneten 117 auf, der der Beeinflussung der axialen Länge des zumindest einen Pufferbereichs 103 dient.

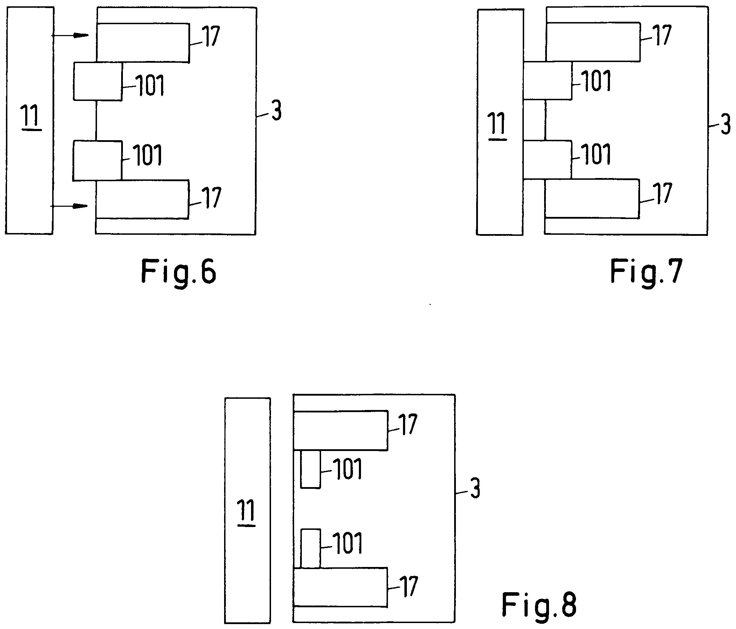

Anhand von Fig. 6 bis Fig. 8 wird noch in allgemeiner Form ein bevorzugter Prozess beschrieben, bei dem sich der Anker 11 oder ein anderer Teil des drehbaren Teils dem feststehenden Teil 3 annähert. Dabei entspricht der Zustand gemäß Fig. 8 dem in Fig. 4 gezeigten Zustand.

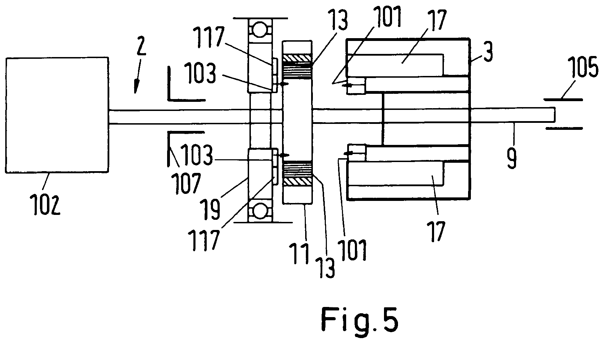

Fig. 5 zeigt die Anordnung von Fig. 4, wobei sich der drehbare Teil 2, zu dem die Welle 9 und der Anker 11 gehören, annähernd in der zweiten axialen Position befindet. Dabei ist der Anker 11 in der Anschlagsposition, die definiert ist durch einen nicht in Fig. 5 gezeigten Anschlag, z.B. in der Art der Fig. 1 bis Fig. 3. Wiederum ist nicht der Zustand gezeigt, in dem der Anker 11 an dem Pufferbereich anliegt, sondern der kontrahierte Längenzustand des Pufferbereichs 103.

Entsprechend der im Vergleich zu Fig. 4 nach links verschobenen axialen Position sind auch die Welle 9 und das Werkzeug 102 relativ zum feststehenden Teil 3 axial verschoben.

Der im Folgenden anhand von Fig. 6 bis Fig. 8 erläuterte Prozess der Annäherung des Ankers 11 bzw. einer Scheibe des drehbaren Teils des Drehgelenks bezieht sich z.B. auf das Ausführungsbeispiel von Fig. 1 bis Fig. 3 und/oder auf die schematisch in Fig. 4 und Fig. 5 dargestellte Anordnung. Dabei ist rechts in Fig. 6 bis Fig. 8 jeweils der feststehende Teil 3 und links der Anker 11 dargestellt. Entsprechend kann dieser Prozess jedoch auch bei Annäherung des Ankers 11 in der Anordnung gemäß Fig. 4 und Fig. 5 bei einer axialen Bewegung in Richtung der zweiten axialen Position, auf das Anschlagselement 19 zu, ausgeführt werden. In diesem Fall würde sich dort das Anschlagselement 19 mit dem zumindest einen Pufferbereich 103 und dem Elektromagneten 117 befinden.

Fig. 6 zeigt, wie der Anker 11 sich (wie durch zwei nach rechts weisende Pfeile angedeutet ist) auf den feststehenden Teil 3 zubewegt. Dabei ist das von dem Elektromagneten 17 erzeugte Magnetfeld so stark und so ausgerichtet, dass die Pufferbereiche 101 sich in einem in axialer Richtung ausgedehnten Zustand befinden. Die Pufferbereiche 101 stehen daher über den Rand des feststehenden Teils 3 in axialer Richtung über, d.h. bilden einen Vorsprung, den oben erwähnten Vor-Anschlag.

Wie in Fig. 7 gezeigt, erreicht der Anker 11 daher bei fortschreitender Bewegung zunächst die Oberfläche der Pufferbereiche 101. Da diese aus elastischerem Material gebildet sind als das Material des feststehenden Teils 3 sonst, ist der Anschlag gedämpft. In Fig. 8 ist der Zustand gezeigt, in dem das von dem Elektromagneten 17 erzeugte Magnetfeld verändert wurde, insbesondere abgeschaltet wurde oder umgepolt wurde, um die Pufferbereiche in einen kontrahierten Zustand zu bringen, in dem der Anker 11 nicht mehr an den Pufferbereichen 101 anliegt. Bei der Kontraktion der Pufferbereiche 101 wird die Bewegung des Ankers 11 in Richtung des feststehenden Teils 3 fortgesetzt, bis ein harter Anschlag erreicht ist. Da die Geschwindigkeit, mit der der Anker 11 den harten Anschlag erreicht, aber sehr viel geringer ist als ohne die Pufferbereiche 101, ist die durch den harten Anschlag erfahrene Verzögerung sehr viel geringer. Die Pufferbereiche 101 haben kinetische Energie des Ankers 11 aufgenommen und außerdem kann der Anker 11 bei seiner Bewegung, die er ausführt, sobald er die Oberflächen der Pufferbereiche 101 erreicht hat, nur noch sehr wenig kinetische Energie aufnehmen.

Das für die Elongation, d.h. für das Ausdehnen der Pufferbereiche 101 verantwortliche Magnetfeld, muss nicht allein von dem Elektromagneten 17 aufgebracht werden. Vielmehr kann jegliche magnetische Kraft, die in dem Drehgelenk wirkt, dazu beitragen. Insbesondere kann der Anker zumindest einen Permanentmagneten aufweisen, der dazu beiträgt. In geringem Umfang kann auch der zumindest eine Elektromagnet des Anschlagselements 19 dazu beitragen. Ferner kann der feststehende Teil 3 nicht nur den Elektromagneten 17 oder mehrere solcher Elektromagneten aufweisen, sondern auch einen Permanentmagneten oder mehrere Permanentmagneten. Vorzugsweise jedoch ist das von dem zumindest einen Elektromagneten des feststehenden Teils 3 erzeugte Magnetfeld entscheidend für den Elongationszustand bzw. die Kontraktion der Pufferbereiche 101. In der in Fig. 6 bis Fig. 8 dargestellten Anordnung befinden sich die Pufferbereiche 101 radial einwärts des oder der Elektromagneten 17. In diesem Bereich ist das von dem oder den Elektromagneten 17 erzeugte Magnetfeld im Wesentlichen homogen und erstrecken sich die Magnetfeldlinien in axialer Richtung des Drehgelenks. Somit ist der auf die Pufferbereiche 101 ausgeübte Einfluss, der zu einer Kontraktion oder Elongation führt, besonders groß.

## Patentansprüche

1. Drehgelenk (1) zum Drehen eines Werkzeugs, insbesondere eines Sensors zum Abtasten von Prüfobjekten zur Erzeugung von Messsignalen eines Koordinatenmessgerätes, wobei
- das Drehgelenk (1) einen um eine Drehachse (5) drehbaren Teil (2) aufweist, mit dem das Werkzeug verbindbar oder verbunden ist,
- das Drehgelenk (1) einen feststehenden Teil (3) aufweist, relativ zu dem der drehbare Teil (2) um die Drehachse (5) drehbar ist,
- der drehbare Teil (2) relativ zu dem feststehenden Teil (3) in axialer Richtung der Drehachse (5) beweglich ist, wobei in einer ersten axialen Position eine Drehung des drehbaren Teils (2) um die Drehachse (5) verhindert ist und wobei in einer zweiten axialen Position eine Drehung des drehbaren Teils (2) um die Drehachse (5) möglich ist,
- das Drehgelenk (1) eine erste magnetische Einrichtung (13, 17) aufweist, die derart ausgestaltet und angeordnet ist, dass eine von der ersten magnetischen Einrichtung (13, 17) erzeugte Magnetkraft auf den drehbaren Teil (2) ausgeübt wird, um den drehbaren Teil (2) in der ersten und/oder zweiten axialen Position zu halten und/oder eine Bewegung des drehbaren Teils (2) von der ersten in die zweite axiale Position und/oder umgekehrt zu bewirken,
- das Drehgelenk zumindest einen Pufferbereich (101, 103) aus einem magnetostriktiven Material aufweist, der derart an dem drehbaren Teil (2), an dem feststehenden Teil (3) und/oder einem Anschlagselement (19) mit einem Anschlag für das Erreichen der zweiten axialen Position angeordnet ist, dass eine Länge des Pufferbereichs (101, 103) in axialer Richtung durch ein Magnetfeld der ersten magnetischen Einrichtung (13, 17) und/oder ein Magnetfeld einer anderen magnetischen Einrichtung veränderbar ist, sodass der drehbare Teil (2) beim Erreichen der ersten oder zweiten axialen Position an dem Pufferbereich (101, 103) anschlägt.

2. Drehgelenk (1) nach dem vorhergehenden Anspruch, wobei der Pufferbereich an dem drehbaren Teil (2), an dem feststehenden Teil (3) und/oder dem Anschlagselement (19) angeordnet ist, wobei die Länge des Pufferbereichs in axialer Richtung durch eine Veränderung des Magnetfeldes der ersten magnetischen Einrichtung (13, 17) oder durch ein Magnetfeld einer zweiten magnetischen Einrichtung derart verändert wird, dass der drehbare Teil (2) einen harten Anschlag kontaktiert, nachdem der drehbare Teil (2) den Pufferbereich (101, 103) kontaktiert hat.

3. Drehgelenk (1) nach einem der vorhergehenden Ansprüche, wobei die erste magnetische Einrichtung (13, 17) zumindest einen Permanentmagneten (13) aufweist.

4. Drehgelenk (1) nach einem der vorhergehenden Ansprüche, wobei die erste magnetische Einrichtung (13, 17) einen Elektromagneten (17) aufweist und wobei der drehbare Teil (2) einen Anker (11) aufweist, der zwischen einer ersten Anschlagsposition in der ersten axialen Position und einer zweiten Anschlagsposition in der zweiten axialen Position hin und her bewegbar ist, wobei der Elektromagnet die Bewegung zumindest in einer Richtung steuert.

5. Drehgelenk (1) nach dem vorhergehenden Anspruch, wobei der feststehende Teil (3) zumindest einen Pufferbereich (101, 103) aus dem magnetostriktiven Material aufweist, der bei einem entsprechenden Gesamt-Magnetfeld einen Vor-Anschlag bildet, der von dem Anker (11) oder von dem mit dem Anker verbundenen drehbaren Teil vor dem durch den feststehenden Teil (3) gebildeten ersten Anschlag erreicht wird, wenn sich der Anker (11) in die erste axiale Position bewegt.

6. Drehgelenk (1) nach dem vorhergehenden Anspruch, wobei das Anschlagselement eine zweite magnetische Einrichtung aufweist, die derart ausgestaltet und angeordnet ist, dass eine von der zweiten magnetischen Einrichtung erzeugte Magnetkraft in der axialen Richtung auf den drehbaren Teil (2) ausgeübt wird, die den Anker (11) in der zweiten axialen Position hält.

7. Drehgelenk (1) nach einem der Ansprüche 4 bis 6, wobei das Anschlagselement (19) zumindest einen Pufferbereich (103) aus dem magnetostriktiven Material aufweist, der bei einem entsprechenden Gesamt-Magnetfeld einen Vor-Anschlag bildet, der von dem Anker (11) oder von dem mit dem Anker verbundenen drehbaren Teil (2) vor dem Anschlag für das Erreichen der zweiten axialen Position erreicht wird, wenn sich der Anker (11) in die zweite axiale Position bewegt.

8. Koordinatenmessgerät, wobei das Drehgelenk (1) nach einem der vorhergehenden Ansprüche an dem Koordinatenmessgerät montiert ist und einen Sensor des Koordinatenmessgeräts als Werkzeug trägt.

9. Verfahren zum Betreiben eines Drehgelenks (1), das zum Drehen eines Werkzeugs, insbesondere eines Sensors zum Abtasten von Prüfobjekten zur Erzeugung von Messsignalen eines Koordinatenmessgerätes, ausgestaltet ist, wobei
- das Werkzeug mit einem um eine Drehachse (5) drehbaren Teil (2) des Drehgelenks (1) verbunden wird, sodass das Werkzeug bei einer Drehbewegung des drehbaren Teils (2) gedreht wird,
- das Drehgelenk (1) einen feststehenden Teil (3) aufweist, relativ zu dem der drehbare Teil (2) um die Drehachse (5) drehbar ist,
- der drehbare Teil (2) relativ zu dem feststehenden Teil (3) in axialer Richtung der Drehachse (5) bewegt wird, um ihn in eine erste axiale Position zu bringen, in der eine Drehung des drehbaren Teils (2) um die Drehachse (5) verhindert ist, und/oder ihn in eine zweite axiale Position zu bringen, in der eine Drehung des drehbaren Teils (2) um die Drehachse (5) möglich ist,
- eine von einer ersten magnetischen Einrichtung (13, 17) erzeugte Magnetkraft auf den drehbaren Teil (2) ausgeübt wird, um den drehbaren Teil (2) in der ersten und/oder zweiten axialen Position zu halten und/oder eine Bewegung des drehbaren Teils (2) von der ersten in die zweite axiale Position und/oder umgekehrt zu bewirken,
- das Magnetfeld der ersten magnetischen Einrichtung (13, 17) und/oder einer anderen magnetischen Einrichtung derart eingestellt wird, dass die Länge eines Pufferbereichs (101, 103) aus einem magnetostriktiven Material verändert wird, sodass der drehbare Teil (2) beim Erreichen der ersten oder zweiten axialen Position an dem Pufferbereich (101, 103) anschlägt.

10. Verfahren zum Herstellen eines Drehgelenks (1), das einem Drehen eines Werkzeugs dient, insbesondere eines Sensors zum Abtasten von Prüfobjekten zur Erzeugung von Messsignalen eines Koordinatenmessgerätes, wobei
- ein um eine Drehachse (5) drehbarer Teil (2) bereitgestellt wird, mit dem das Werkzeug verbindbar oder verbunden ist,
- ein feststehender Teil (3) bereitgestellt wird, relativ zu dem der drehbare Teil (2) um die Drehachse (5) drehbar ist,
- der drehbare Teil (2) relativ zu dem feststehenden Teil (3) in axialer Richtung der Drehachse (5) beweglich ausgeführt wird, wobei in einer ersten axialen Position eine Drehung des drehbaren Teils (2) um die Drehachse (5) verhindert ist und wobei in einer zweiten axialen Position eine Drehung des drehbaren Teils (2) um die Drehachse (5) möglich ist,
- eine erste magnetische Einrichtung (13, 17) derart ausgestaltet und angeordnet wird, dass eine von der magnetischen Einrichtung (13, 17) erzeugte Magnetkraft auf den drehbaren Teil (2) ausübbar ist, um den drehbaren Teil (2) in der ersten und/oder zweiten axialen Position zu halten und/oder eine Bewegung des drehbaren Teils (2) von der ersten in die zweite axiale Position und/oder umgekehrt zu bewirken,
- zumindest ein Pufferbereich (101, 103) aus einem magnetostriktiven Material an dem drehbaren Teil (2), an dem feststehenden Teil (3) und/oder an einem Anschlagselement (19) mit einem Anschlag für das Erreichen der zweiten axialen Position angeordnet wird, dass eine Länge des Pufferbereichs (101, 103) in axialer Richtung durch ein Magnetfeld der ersten magnetischen Einrichtung (13, 17) und/oder ein Magnetfeld einer anderen magnetischen Einrichtung verändert wird, sodass der drehbare Teil (2) beim Erreichen der ersten oder zweiten axialen Position an dem Pufferbereich anschlägt.

## Claims

1. Rotary joint (1) for rotating a tool, in particular a sensor for scanning test objects to generate measuring signals from a coordinate measuring device, wherein
- the rotary joint (1) has a part (2) which can be rotated about an axis of rotation (5) and to which the tool is or can be connected,
- the rotary joint (1) has a stationary part (3), relative to which the rotatable part (2) can be rotated about the axis of rotation (5),
- the rotatable part (2) is movable relative to the stationary part (3) in the axial direction of the axis of rotation (5), wherein, in a first axial position, rotation of the rotatable part (2) about the axis of rotation (5) is prevented, and wherein, in a second axial position, rotation of the rotatable part (2) about the axis of rotation (5) is possible,
- the rotary joint (1) has a first magnetic device (13, 17), which is configured and arranged in such a way that a magnetic force generated by the first magnetic device (13, 17) is exerted on the rotatable part (2) in order to keep the rotatable part (2) in the first and/or second axial position and/or to effect a movement of the rotatable part (2) from the first to the second axial position and/or vice versa,
- the rotary joint has at least one buffer region (101, 103) of a magnetostrictive material, which is arranged on the rotatable part (2), on the stationary part (3) and/or a stop element (19) having a stop for reaching the second axial position, in such a way that a length of the buffer region (101, 103) in the axial direction can be modified by a magnetic field of the first magnetic device (13, 17) and/or a magnetic field of another magnetic device, so that the rotatable part (2) comes to a stop at the buffer region (101, 103) when reaching the first or second axial position.

2. Rotary joint (1) according to the preceding claim, wherein the buffer region is arranged on the rotatable part (2), on the stationary part (3) and/or the stop element (19), wherein the length of the buffer region in the axial direction is modified by a change in the magnetic field of the first magnetic device (13, 17) or by a magnetic field of a second magnetic device, in such a way that the rotatable part (2) makes contact with a hard stop after the rotatable part (2) has made contact with the buffer region (101, 103).

3. Rotary joint (1) according to one of the preceding claims, wherein the first magnetic device (13, 17) has at least one permanent magnet (13).

4. Rotary joint (1) according to one of the preceding claims, wherein the first magnetic device (13, 17) has an electromagnet (17), and wherein the rotatable part (2) has an armature (11) which can be moved to and fro between a first stop position in the first axial position and a second stop position in the second axial position, wherein the electromagnet controls the movement, at least in one direction.

5. Rotary joint (1) according to the preceding claim, wherein the stationary part (3) has at least one buffer region (101, 103) of the magnetostrictive material which, given an appropriate total magnetic field, forms a prior stop, which is reached by the armature (11) or by the rotatable part connected to the armature, before the first stop formed by the stationary part (3), when the armature (11) moves into the first axial position.

6. Rotary joint (1) according to the preceding claim, wherein the stop element has a second magnetic device, which is configured and arranged in such a way that a magnetic force generated by the second magnetic device is exerted on the rotatable part (2) in the axial direction and keeps the armature (11) in the second axial position.

7. Rotary joint (1) according to one of Claims 4 to 6, wherein the stop element (19) has at least one buffer region (103) of the magnetostrictive material which, given an appropriate total magnetic field, forms a prior stop, which is reached by the armature (11) or by the rotatable part (2) connected to the armature, before the stop for reaching the second axial position, when the armature (11) moves into the second axial position.

8. Coordinate measuring device, wherein the rotary joint (1) according to one of the preceding claims is mounted on the coordinate measuring device and carries a sensor of the coordinate measuring device as a tool.

9. Method for operating a rotary joint (1) which is configured to rotate a tool, in particular a sensor for scanning test objects to generate measuring signals from a coordinate measuring device, wherein
- the tool is connected to a part (2) of the rotary joint (1) that can be rotated about an axis of rotation (5), so that the tool is rotated during a rotary movement of the rotatable part (2),
- the rotary joint (1) has a stationary part (3), relative to which the rotatable part (2) can be rotated about the axis of rotation (5),
- the rotatable part (2) is moved relative to the stationary part (3) in the axial direction of the axis of rotation (5), in order to bring it to a first axial position, in which rotation of the rotatable part (2) about the axis of rotation (5) is prevented, and/or to bring it to a second axial position, in which rotation of the rotatable part (2) about the axis of rotation (5) is possible,
- a magnetic force generated by a first magnetic device (13, 17) is exerted on the rotatable part (2) in order to keep the rotatable part (2) in the first and/or second axial position and/or to effect a movement of the rotatable part (2) from the first to the second axial position and/or vice versa,
- the magnetic field of the first magnetic device (13, 17) and/or another magnetic device is adjusted in such a way that the length of a buffer region (101, 103) of a magnetostrictive material is modified, so that the rotatable part (2) comes to a stop at the buffer region (101, 103) when reaching the first or second axial position.

10. Method for producing a rotary joint (1) which is used to rotate a tool, in particular a sensor for scanning test objects to generate measuring signals from a coordinate measuring device, wherein
- a part (2) which can be rotated about an axis of rotation (5) and to which the tool is or can be connected is provided,
- a stationary part (3), relative to which the rotatable part (2) can be rotated about the axis of rotation (5), is provided,
- the rotatable part (2) is designed to be movable relative to the stationary part (3) in the axial direction of the axis of rotation (5), wherein, in a first axial position, rotation of the rotatable part (2) about the axis of rotation (5) is prevented and wherein, in a second axial position, rotation of the rotatable part (2) about the axis of rotation (5) is possible,
- a first magnetic device (13, 17) is configured and arranged in such a way that a magnetic force generated by the magnetic device (13, 17) can be exerted on the rotatable part (2) in order to keep the rotatable part (2) in the first and/or second axial position and/or to effect a movement of the rotatable part (2) from the first to the second axial position and/or vice versa,
- at least one buffer region (101, 103) of a magnetostrictive material is arranged on the rotatable part (2), on the stationary part (3) and/or on a stop element (19) having a stop for reaching the second axial position, that a length of the buffer region (101, 103) in the axial direction can be modified by a magnetic field of the first magnetic device (13, 17) and/or a magnetic field of another magnetic device, so that the rotatable part (2) comes to a stop at the buffer region when reaching the first or second axial position.

## Revendications

1. Articulation tournante (1) destinée à faire tourner un outil, en particulier un détecteur pour balayer des objets de test en vue de la production de signaux de mesure d'un appareil de mesure de coordonnées, dans laquelle
- l'articulation tournante (1) présente une partie (2) pouvant tourner autour d'un axe de rotation (5), à laquelle l'outil est ou peut être assemblé,
- l'articulation tournante (1) présente une partie fixe (3), par rapport à laquelle la partie rotative (2) peut tourner autour de l'axe de rotation (5),
- la partie rotative (2) est mobile par rapport à la partie fixe (3) dans la direction axiale de l'axe de rotation (5), dans laquelle dans une première position axiale la rotation de la partie rotative (2) autour de l'axe de rotation (5) est empêchée et dans laquelle dans une deuxième position axiale une rotation de la partie rotative (2) autour de l'axe de rotation (5) est possible,
- l'articulation tournante (1) présente un premier dispositif magnétique (13, 17), qui est configuré et disposé de telle manière qu'une force magnétique produite par le premier dispositif magnétique (13, 17) soit exercée sur la partie rotative (2), afin de maintenir la partie rotative (2) dans la première et/ou dans la deuxième position axiale et/ou de provoquer un mouvement de la partie rotative (2) de la première position axiale à la deuxième position axiale et/ou inversement,
- l'articulation tournante (1) présente au moins une zone tampon (101, 103) en un matériau magnétostrictif, qui est disposée sur la partie rotative (2), sur la partie fixe (3) et/ou sur un élément de butée (19) avec une butée pour atteindre la deuxième position axiale, de telle manière qu'une longueur de la zone tampon (101, 103) dans la direction axiale puisse être modifiée par un champ magnétique du premier dispositif magnétique (13, 17) et/ou par un champ magnétique d'un autre dispositif magnétique, de telle manière que la partie rotative (2) bute contre la zone tampon (101, 103) lorsqu'elle atteint la première ou la deuxième position axiale.

2. Articulation tournante (1) selon la revendication précédente, dans laquelle la zone tampon est disposée sur la partie rotative (2), sur la partie fixe (3) et/ou sur l'élément de butée (19), dans laquelle la longueur de la zone tampon dans la direction axiale est modifiée par une modification du champ magnétique du premier dispositif magnétique (13, 17) ou par un champ magnétique d'un deuxième dispositif magnétique, de telle manière que la partie rotative (2) touche une butée dure, après que la partie rotative (2) ait touché la zone tampon (101, 103).

3. Articulation tournante (1) selon l'une quelconque des revendications précédentes, dans laquelle le premier dispositif magnétique (13, 17) présente au moins un aimant permanent (13).

4. Articulation tournante (1) selon l'une quelconque des revendications précédentes, dans laquelle le premier dispositif magnétique (13, 17) présente un électroaimant (17) et dans laquelle la partie rotative (2) présente un induit (11), qui est déplaçable en mouvement réciproque entre une première position de butée dans la première position axiale et une deuxième position de butée dans la deuxième position axiale, dans laquelle l'électroaimant commande le mouvement au moins dans une direction.

5. Articulation tournante (1) selon la revendication précédente, dans laquelle la partie fixe (3) présente au moins une zone tampon (101, 103) constituée du matériau magnétostrictif, qui forme en présence d'un champ magnétique total correspondant une pré-butée, qui est atteinte par l'induit (11) ou par la partie rotative reliée à l'induit avant la première butée formée par la partie fixe (3), lorsque l'induit (11) se déplace dans la première position axiale.

6. Articulation tournante (1) selon la revendication précédente, dans laquelle l'élément de butée présente un deuxième dispositif magnétique, qui est configuré et disposé de telle manière qu'une force magnétique produite par le deuxième dispositif magnétique soit exercée dans la direction axiale sur la partie rotative (2), pour maintenir l'induit (11) dans la deuxième position axiale.

7. Articulation tournante (1) selon l'une quelconque des revendications 4 à 6, dans laquelle l'élément de butée (19) présente au moins une zone tampon (103) constituée du matériau magnétostrictif, qui forme en présence d'un champ magnétique total correspondant une pré-butée, qui est atteinte par l'induit (11) ou par la partie rotative (2) reliée à l'induit avant la butée destinée à atteindre la deuxième position axiale, lorsque l'induit (11) se déplace dans la deuxième position axiale.

8. Appareil de mesure de coordonnées, dans lequel l'articulation tournante (1) selon l'une quelconque des revendications précédentes est montée sur l'appareil de mesure de coordonnées et porte un détecteur de l'appareil de mesure de coordonnées comme outil.

9. Procédé d'utilisation de l'articulation tournante (1), qui est configurée pour faire tourner un outil, en particulier un détecteur pour balayer des objets de test en vue de la production de signaux de mesure d'un appareil de mesure de coordonnées, dans lequel
- on relie l'outil à une partie rotative (2) de l'articulation tournante (1) pouvant tourner autour d'un axe de rotation (5), de telle manière que l'outil tourne lors d'un mouvement de rotation de la partie rotative (2),
- l'articulation tournante (1) présente une partie fixe (3) par rapport à laquelle la partie rotative (2) peut tourner autour de l'axe de rotation (5),
- on déplace la partie rotative (2) par rapport à la partie fixe (3) dans la direction axiale de l'axe de rotation (5), afin de l'amener dans une première position axiale, dans laquelle une rotation de la partie rotative (2) autour de l'axe de rotation (5) est empêchée, et/ou afin de l'amener dans une deuxième position axiale, dans laquelle une rotation de la partie rotative (2) autour de l'axe de rotation (5) est possible,
- on exerce une force magnétique produite par un premier dispositif magnétique (13, 17) sur la partie rotative (2), afin de maintenir la partie rotative (2) dans la première et/ou dans la deuxième position axiale et/ou de provoquer un mouvement de la partie rotative (2) de la première à la deuxième position axiale et/ou inversement,
- on règle le champ magnétique du premier dispositif magnétique (13, 17) et/ou d'un autre dispositif magnétique de telle manière que la longueur d'une zone tampon (101, 103) constituée d'un matériau magnétostrictif soit modifiée, de telle manière que la partie rotative (2) bute contre la zone tampon (101, 103) lorsqu'elle atteint la première ou la deuxième position axiale.

10. Procédé de fabrication d'une articulation tournante (1), qui permet de faire tourner un outil, en particulier un détecteur pour balayer des objets de test en vue de la production de signaux de mesure d'un appareil de mesure de coordonnées, dans lequel
- on procure une partie (2) pouvant tourner autour d'un axe de rotation (5), à laquelle l'outil est ou peut être assemblé,
- on procure une partie fixe (3), par rapport à laquelle la partie rotative (2) peut tourner autour de l'axe de rotation (5),
- on réalise la partie rotative (2) sous forme mobile par rapport à la partie fixe (3) dans la direction axiale de l'axe de rotation (5), dans lequel dans une première position axiale une rotation de la partie rotative (2) autour de l'axe de rotation (5) est empêchée et dans lequel dans une deuxième position axiale une rotation de la partie rotative (2) autour de l'axe de rotation (5) est possible,
- on configure et on dispose un premier dispositif magnétique (13, 17) de telle manière qu'une force magnétique produite par le premier dispositif magnétique (13, 17) puisse être exercée sur la partie rotative (2), afin de maintenir la partie rotative (2) dans la première et/ou dans la deuxième position axiale et/ou de provoquer un mouvement de la partie rotative (2) de la première à la deuxième position axiale et/ou inversement,
- on dispose au moins une zone tampon (101, 103) constituée d'un matériau magnétostrictif sur la partie rotative (2), sur la partie fixe (3) et/ou sur un élément de butée (19) avec une butée permettant d'atteindre la deuxième position axiale, que la longueur de la zone tampon (101, 103) dans la direction axiale soit modifiée par un champ magnétique du premier dispositif magnétique (13, 17) et/ou par un champ magnétique d'un autre dispositif magnétique, de telle manière que la partie rotative (2) bute contre la zone tampon lorsqu'elle atteint la première ou la deuxième position axiale.
